# EUROPEAN PATENT APPLICATION

(11) **EP 2 740 632 A1**
(43) Date of publication of application: **11.06.2014**
(21) Application number: 12196114.8
(22) Date of filing: 07.12.2012
(51) Int. Cl.: B60Q 1/26, B60R 1/12

(54) **Lateral rearview mirror system for a vehicle, method for projecting an image to the environment of the vehicle and corresponding application program product**

(71) Applicant: Nüssli, Urs, 6005 Luzern (CH)
(72) Inventor: Nüssli, Urs, 6005 Luzern (CH)
(74) Representative: Werner, André

(57) **Abstract**

The present invention involves a lateral rearview mirror system (10) for a vehicle and a vehicle as well as a method and a corresponding application program product for operating a lateral rearview mirror system (10). Thereby the lateral rearview mirror system (10) comprises a projector (20) such as a laser beamer for projecting an image (40) to the environment of the vehicle. This way, an enhanced visual presentation and communication of information is achieved.

## Description

### TECHNICAL FIELD OF THE INVENTION

The present invention is related to a lateral rearview mirror system for a vehicle, a vehicle with such a mirror system as well as a method and a corresponding application program product for operating a lateral rearview mirror system.

### BACKGROUND OF THE INVENTION

Rearview mirrors arranged on the side of a vehicle, called lateral rearview mirror, with additional functionalities are well known in the prior art. For example, EP 1690736 A2 describes a lateral rearview mirror with an integrated light source. Thereby, the emitted light is directed towards the side environment of the vehicle for illuminating the ground area at the side by a diffuse light. This may be useful for changing wheels or looking for keys.

### SUMMARY OF THE INVENTION

The present invention has the objective to propose an improved lateral rearview mirror system and an improved vehicle as well as an improved method and an improved application program product for operating a lateral rearview mirror system.

This objective is reached by a lateral rearview mirror system comprising the features specified in claim 1. A vehicle, a method and an application program product as well as further embodiments of the invention are specified in the further claims.

The present invention involves a lateral rearview mirror system for a vehicle. Thereby, the lateral rearview mirror system comprises a projector for projecting an image to the environment of the vehicle. This way, an enhanced visual presentation and communication of information is achieved.

A lateral rearview mirror is arranged at the side of the vehicle, typically arranged near or at the side door of the vehicle. The corresponding system, i.e. the lateral rearview mirror system, comprises the actual rearview mirror and further devices such as motors for positioning the rearview mirror or a direction indicator. In one example, the lateral rearview mirror system according to the invention is arranged on the driver's side of the vehicle. It may also be arranged opposite to the driver's side or on both sides of the vehicle.

In a further example, the projector is configured and/or arranged for projecting the image to the lateral environment of the vehicle, in particular to the ground and/or floor of the lateral environment, further in particular towards a pavement and/or a walkway on the side of the vehicle. This way information is communicated to further traffic participants, in particular pedestrians.

The term "projector" is understood as any kind of device capable of reproducing an image by projecting light from a light source onto a projection surface. For example, the projector is a light bulb with an image forming blind and a lens system, an LED image projector, a laser light projector or a laser beam projector. The projection is mainly intended to be visible at night, dawn, twilight and indoors but may also be visible by daylight. The projection surface is the ground of the side environment of the vehicle, typically the pavement; other surfaces may however also be possible, for example a curbstone, an adjacent wall or the sidewall of the vehicle, in particular the door surface.

The term "image" is used for all kind of visual objects, for example, a two- or three-dimensional image, a line drawing, a text or data, a fixed image such as a picture or a moving image such as animated image or an image sequence, in particular a video sequence or a video clip. In one example, the image is a text or a logo, in particular the logo of a trademark or a brand, further in particular the logo of the vehicle manufacturing company. The images may be chosen from a predetermined library, may be generated ad hoc by an image processor or the user may create the image himself, for example by executing an imaging program or by modifying existing images, for example modifying a photo selected from a photo gallery. Of course, any combination of the above may also be possible.

Surprisingly, the invention is particularly advantageous for providing complex visual information in an immediately understandable and very efficient way. For example, an image may be displayed for increasing the security in a traffic environment, as the driver may indicate the intended change of direction during driving or during waiting at a traffic light.

In an embodiment of the invention, the projector comprises an electrically controllable image generating unit for providing the image to be projected, which in particular comprises a display, further in particular an LCD (Liquid Crystal Display), and/or a beamer, further in particular a laser beamer. This way, a strong visual effect can be achieved, for example for presenting a picture or 2-dimensional graphic.

A beamer generates an image by modulating a light beam, which has the advantage of a high depth of field, such that images can be projected onto a large variety of projection surfaces, even non-flat surfaces or surfaces at an angle. This is particularly advantageous for projecting onto an irregular side environment and/or over different projection distances. Further, a laser beamer has the advantage of producing a strong light, which provides a clearly visible image, even at daylight.

In a further example, the resolution of the projector or the image generating unit is equal or more than 848 x 400, in particular equal or more than 1280 x 720.

In a further embodiment of the invention, the projector comprises a light source, in particular an LED or a laser light source, and/or an optical unit, in particular a lens system, for projecting the image as a sharp-contoured image. The lens system may comprise a single lens or a plurality of lenses. The LED (light-emitting diode) and/or the lens system provide for a cost-efficient presentation of visual information, for example a specific text and/or a logo. The laser light source provides a strong light.

In one example, a light source of more than 10 Watt, in particular of more than 20 Watt is used. In another example, the projector and/or the optical unit is movable relative to the lateral rearview mirror system. Therefore, in dependency on the actual distance of the projection, a sharp-edged image can always be achieved.

In a further embodiment of the invention, the mirror system, in particular the projector, is configured to project the image as a static image, in particular a text or a logo, and/or as a series of images, in particular as an animated image or a video sequence. With a static image a comfortable user-programmed implementation can be achieved, whereas with the series of images a dynamically changing image can be presented, which easily attracts attention.

In one example, the duration of the series of images lasts over a predetermined length of time, which in particular is in the range of approx. 1 to 60 seconds, further in particular of approx. 3 to 10 seconds.

In a further example, the projector is configured to project the image with an additional effect, in particular at least one of:
- a stroboscope effect,
- a fading in,
- a fading out,
- a rotation,
- a white light,
- a colored light.

This way, additional attention, additional information and/or increased security can be achieved.

In one example, the projector also serves as a direction indicator and/or as vehicle illumination at night. In a further example, the maximum diameter of the projected image is approximately in the range of 0.1 to 2 meter, in particular 0.5 to 1 meter. In a further example, the image is displayed laterally of the vehicle and/or towards the front wheel of the vehicle, in particular on the driver's side.

In a further embodiment of the invention, the lateral rearview mirror system comprises a housing with a light passage, in particular a transparent window, and the projector is located in the interior of the housing, in particular behind a rear mirror, and is arranged for projecting the image through the light passage. This way a compact and robust building unit is achieved. In one example, the passage is sealed by a security glass or a polymer for protecting the projector from external impacts such as exposure to weather impacts.

In one example, the transparent window is flush with the surface of the mirror system. This achieves aero dynamical advantages, for example less turbulences. In another example, the projector is small enough to be mounted within an already existing housing of the lateral rear mirror system and/or behind the rear mirror. Thus, the shape of the lateral rear mirror system remains unchanged and only uses the available room. This is particularly advantageous to upgrade, i.e. retrofit, an existing rearview mirror system. In a further example, the projector or the image generating unit has the dimensions of less than 25 mm x 100 mm x 150 mm, in particular less than 15 mm x 70 mm x 100 mm. In a further example, the weight of the projector is less than 300 grams, in particular less than 150 grams.

In a further embodiment of the invention, the mirror system comprises a user data interface for receiving user control data, in particular a selection command, and the projector is configured to project the image in dependency on the received user control data. This allows for individually controlling the projected image, for example by a remote control.

In a further embodiment of the invention, the mirror system comprises a vehicle data interface for receiving vehicle data from a vehicle management system, in particular from a door locking system, and the projector is configured to project the image in dependency on the received vehicle data. This way, an operational coordination between the vehicle and the projection of the image is achieved.

In a further embodiment of the invention, the mirror system comprises a memory unit for storing display data and/or a display data interface for receiving display data, and the projector is configured to project the image according to the display data. This allows for an efficient and fast providing of large data volumes such as data of complex images or a series of images.

In one example, the display data interface is a VGA or a HDMI interface. The display data may be provided by a data processor external to the projector, a remote control or a vehicle management system.

In one example, the display data interface is combined with the user data interface and/or with the vehicle data interface. In another example, the user data interface is combined with the vehicle data interface. Thus, the user data may be provided via the vehicle data interface and/or via the display data interface. Further, the display data for generating and/or projecting the image may be provided via the vehicle data interface or the user data interface or via both interfaces.

In a further example, at least one of the user data interface, the vehicle data interface or the display data interface provides for a unidirectional or a bidirectional data connection. In another example, at least one of these interfaces provides for a wireless and/or a wired connection. In a further example, at least one of these data connections is a local connection such as a data bus or a remote connection such as a GPRS connection.

In a further embodiment of the invention, the lateral rearview mirror system comprises a control unit, which is connected to the projector for transmitting display data to the projector, which is configured to project the image according to the received display data. In one example, the control unit is connected to the user interface and/or to the vehicle data interface. In another example, the control unit comprises the memory unit for reading at least part of the display data from the memory unit. In a further example, the control unit is located in the interior of the lateral rearview mirror system, in particular in the projector, or in the vehicle. In a further example, the control unit is implemented by a microprocessor, in particular a digital and/or programmable processor.

In another example, the lateral rearview mirror system is integrated in the electrics and/or electronics of the vehicle. The projector may replace the regular illumination of the lateral rear mirror, but may also be combined with it. The mirror system may be operated by the 12 V DC voltage of the vehicle (board net), but may also be operated by changing the voltage of the vehicle to a suitable voltage for the mirror system, in particular the voltage of the projector and/or the control unit, for example 5 Volt. This may be accomplished by DC/DC converters, which may be located in the vehicle in the mirror system.

In another example, the operation of the lateral rearview mirror system according to the invention is similar to the operation of the usual illumination of the vehicle, which means the mirror system will be operating and put to operation by the opening or unlocking of the vehicle door (without starting the engine) until a predefined point in time.

Further, the invention involves a vehicle, in particular a passenger car, with at least one lateral rearview mirror system according to any one of the previous embodiments or examples, which in particular is arranged near or at the driver's door. The mirror system can also be arranged on the opposite side or on both sides. A one-sided application is particularly cost effective.

In a further embodiment of the invention, the vehicle comprises a vehicle management system, in particular a door lock control system, which is connected, in particular via a vehicle data interface, to the lateral rearview mirror system for transmitting status data of the vehicle to the lateral rearview mirror system. This way, a good coordination of operation between vehicle and projector is achieved.

Further, the invention involves a method for projecting an image to the lateral environment of a vehicle by using a lateral rearview mirror system, in particular the one according to any of the previous embodiments or examples, the method comprising the steps of:
- determining image data on a remote control;
- transmitting the image data as user control data from the remote control to the lateral rearview mirror system; and
- using the received user control data for projecting the image to the side environment of the vehicle.

The term "image data" includes all kind of data, which is related to an image such as image parameters, image descriptions or the image itself. Further, the advantages of the method according to the invention correspond to the advantages of the previously mentioned lateral rearview mirror system and vehicle and vice versa.

In a further embodiment of the previously mentioned method, the step of determining image relating data and/or the step of using of the received control data comprises the step of selecting the image data from a set of stored data. This allows fast and convenient control and generation of the image to be projected and an efficient use of the available bandwidth, which is particularly advantageous for projecting complex images or video sequences.

In a further embodiment of the previously mentioned method embodiment, the step of determining image data comprises the step of providing a preview of the image to be displayed by the lateral rearview mirror system. This allows for a convenient control, test and/or redesign of the image to be projected.

In a further embodiment of the previously mentioned method embodiment, the step of determining image data comprises determining an image parameter, which in particular is related to at least one of:
- a logo,
- a symbol,
- a pictogram,
- a text,
- a name,
- a trademark,
- an acronym,
- an emoticon,
- an emoji,
- an image,
- an animated image,
- a video,
- a position,
- a motion,
- a fading in,
- a fading out,
- a stroboscope effect,
- a rotation,
- a color,
- a direction indication, and
- a vehicle illumination.

This way, an efficient determination of the image to be projected is achieved.

In one example, the position indicates a fixed, in particular specific, position in front of a door of the vehicle. In another example, the motion indicates a movement from the door of the vehicle to the ground near the vehicle. In a further example, the motion indicates a movement towards the vehicle, thus leading the driver to the vehicle. In a further example, the motion comprises a circular or elliptical rotation.

Further, the invention involves an application program product being executable on a portable remote control, in particular a vehicle remote control and/or a mobile phone, for performing the step of determining the image data of the method according to any one of the previous method embodiments. This allows for efficient and convenient design and/or selection of the image to be projected. In one example, the application program product is an "App", which is an application program that is conveniently downloadable and easy to install.

It is expressly pointed out that any combination of the above-mentioned embodiments, or combinations of combinations, is subject to a further combination. Only those combinations are excluded that would result in a contradiction.

### BRIEF DESCRIPTION OF THE DRAWINGS

Below, the present invention is described in more detail by means of exemplary embodiments and the included drawings. It is shown in:
- Fig. 1: a simplified perspective illustration of a passenger car with a mirror system 10 according to the invention;
- Fig. 2: a simplified block diagram illustrating the technical implementation of the mirror system 10 according to Fig. 1; and
- Fig. 3: a simplified block diagram illustrating the operation of an application program 100 for the mirror system 10 according to Fig. 1.

### BRIEF DESCRIPTION OF THE INVENTION

The described embodiments are meant as illustrating examples and shall not confine the invention.

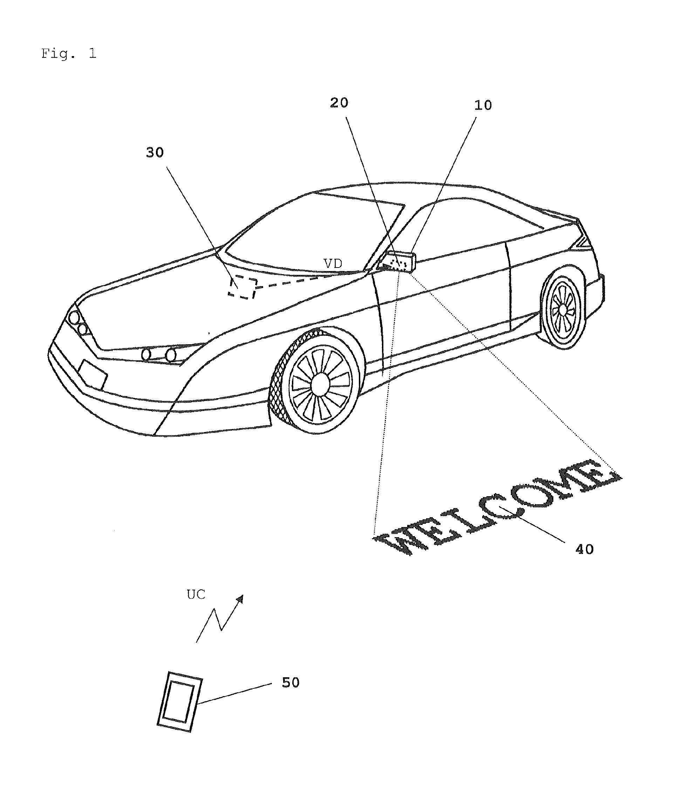

Fig. 1 shows a simplified perspective illustration of a vehicle, in this example a passenger car, in particular a sports car, with a lateral rearview mirror system according to the invention on the driver's side of the car (driver side not indicated), which in this example is simply called mirror system 10.

The mirror system 10 comprises a housing with a rearview mirror (not shown), two motors for positioning the rearview mirror (not shown) and a projector 20. The driver can see objects that are located laterally behind the car by looking through the side window into the mirror system 10.

The projector 20 is located in the interior of the housing of the mirror system 10 behind the rear mirror (indicated by a dotted line) and oriented towards the lateral environment of the car. The light emitted by the projector passes from the inside of the housing through a transparent window (not shown) to the exterior of the housing onto the pavement of the lateral environment of the car (indicated by dotted lines). The transparent window is a polymer that seals the housing from the environment and provides a light passage for the projection.

In this example, the projector 20 comprises an electrically controllable image generating unit. The projector 20 generates and projects an image 40 onto the pavement, in this case the text "WELCOME". The light of the laser beamer 28 is strong enough to project the image 40 as a clearly visible image, even at daylight. The projector 20 may also project a great number of other images such as logos or graphics or dynamically changing images such as video sequences. The dimension of the image 40, i.e. the length of the text as displayed on the pavement, is approximately 0.5 meter.

The car further comprises a vehicle management system that includes a door locking system 30. The door locking system 30 is connected via a wire connection to the mirror system 10 (indicated by a dotted line) for transmitting vehicle data VD from the door locking system 30 to the mirror system 10. In this example, the vehicle data VD comprises information about the status of doors of the car, for example closed and just unlocked.

Further, an external remote control, implemented as a mobile phone 50 with touch-screen display, sometimes also called smart-phone, is shown in Fig. 1. The mobile phone 50 is connected to the mirror system 10 by a wireless connection (indicated by a z-arrow) for transmitting user control data UC from the mobile phone 50 to the mirror system 10. In this example, the user control data UC comprises data concerning the text to be displayed as the image 40, i.e. the word "WELCOME".

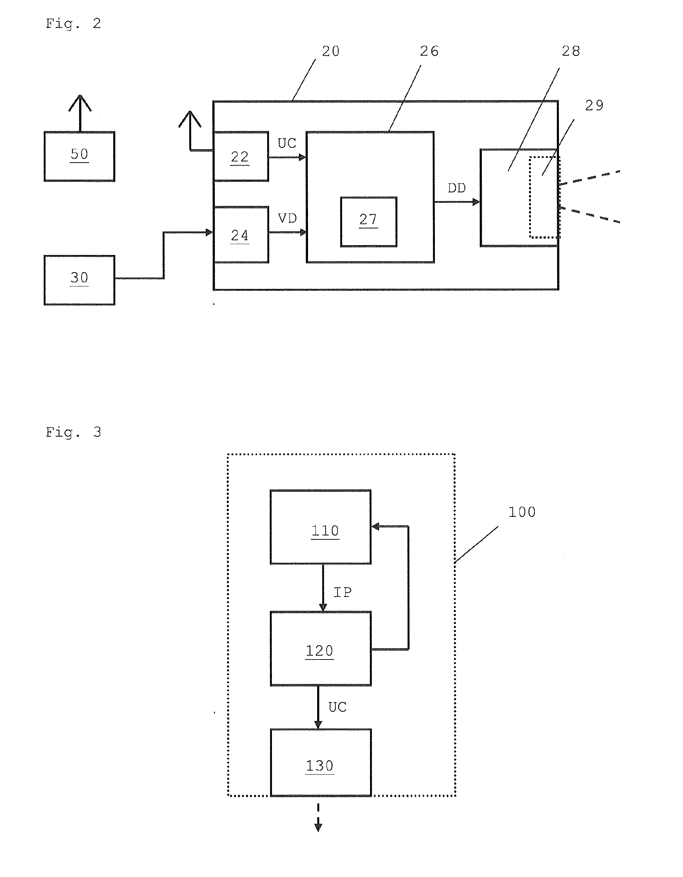

Further details of the projector 20 and its interaction with the door locking system 30 and the mobile phone 50 are described with Fig. 2.

Fig. 2 shows a simplified block diagram, which illustrates the technical implementation of the mirror system 10 according to Fig. 1.

The projector 20 comprises a user data interface 22, a vehicle data interface 24, a control unit 26 and a laser beamer 28, which comprises a laser light source. The user data interface 22 and the vehicle data interface 24 are connected to the control unit 26 by a wire connection. Similarly, the control unit 26 is connected to the laser beamer 28 via a wire connection for transmitting an electrical output signal from the control unit 26 to the laser beamer 28 via a display data interface, in this example via a VGA interface (not shown).

Further, the mobile phone 50 is connected to the user data interface 22 via a wireless connection for transmitting a first electrical input signal from the mobile phone 50 to the control unit 26 via the user control interface 22. Similarly, the door locking system 30 according to Fig. 1 is connected to the vehicle data interface 24 via a digital bus system for transmitting a second electrical input signal from the door locking system 30 to the control unit 26 via the vehicle data interface 24. Thereby, the first electrical input signal is used to transmit the user control data UC from the mobile phone 50 to the control unit 26 and the second electrical input signal is used to transmit the vehicle data VD from the door locking system 30 to the control unit 26. Further, the control unit 26 uses the electrical output signal for transmitting display data DD to the laser beamer 28 via the display data interface.

The control unit 26 further comprises a memory unit 27, which stores data for generating the image 40 to be projected according to Fig. 1. In this example, the stored data comprises a graphical data representing text letters.

The control unit 26 is configured to use the user control data UC, the vehicle data VD and the data from the memory 27 to generate the display data DD. In this example, the control unit 26 uses the user control data UC for selecting data stored in the memory 27, i.e. a specific data representation of the received text, and evaluates the vehicle data VD, which in this exemplary situation indicates that the doors have reached the status "unlocked". Thus, the control unit 26 generates the display data DD, which corresponds to the text "WELCOME", only when the doors of the car have been unlocked.

In the following, the control unit 26 starts the laser beamer 28 and transmits the generated display data DD as output signal to the laser beamer 28. The laser beamer 28 uses the display data DD to generate and project the image 40 according to Fig. 1 (as indicated by the dashed lines). This is accomplished by a commonly available laser beamer 28, which is often called micro beamer or pico beamer.

After a predetermined time, for example after 20 seconds, the power supply of the laser beamer 28 is switched off.

In this example, a laser beamer 28 without a lens system is used. In another example the projector 20 may be used, which is based on a conventional light system with an optical unit, for example a lens system 29. The lenses in such a system are designed to focus the projected image to provide a sharp-contoured image over a large range.

Fig. 3 shows a simplified block diagram, which illustrates the operation of an application program 100 for the mirror system 10 according to Fig. 1.

The application program 100, in this example called "App" (indicated by the dotted line), is an application program product, which is loaded and executed on a mobile phone. When executed, the application program 100 performs a number of steps, which partly correspond to the steps of the method according to the invention.

In this example, the application program 100 performs a number of steps, depicted as blocks 110, 120 and 130. These steps are explained by the following:
Block 110: For determining image data, the user executes the application program 100 on the mobile phone. In this example, the user defines the image data by choosing an image parameter IP, in this case "text", and types a text "WELCOME" on the mobile phone. The application program 100 hands the image parameter IP over to the next processing step, represented as block 120.
Block 120: From the image parameter IP, which represents the typed text, the app generates a preview of the image, which corresponds to the image that will be displayed later by the mirror system 10 of the car according to Fig. 1. If the user prefers to alter the image, the application program 100 provides an option to the user to go back to block 110. In case the user is satisfied with the preview, the image parameter IP is handed over as user control data UC to the next processing step, represented as block 130.
Block 130: The user control data UC, representing the word "WELCOME", is transmitted from the mobile phone to the control unit of the car via a wireless connection (indicated by the dashed arrow). There, the control data UC is processed as described with Fig. 2.

## Claims

1. A lateral rearview mirror system (10) for a vehicle, wherein the lateral rearview mirror system (10) comprises a projector (20) for projecting an image (40) to the environment of the vehicle.

2. The mirror system (10) according to claim 1, wherein the projector (20) comprises an electrically controllable image generating unit (28) for providing the image (40) to be projected, which in particular comprises a display, further in particular an LCD, and/or a beamer, further in particular a laser beamer.

3. The mirror system (10) according to claim 1 or 2, wherein the projector (20) comprises a light source, in particular a LED or a laser light source, and/or an optical unit (29), in particular a lens system, for projecting the image (40) as a sharp-contoured image.

4. The mirror system (10) according to any one of the previous claims, wherein the mirror system (10), in particular the projector (20), is configured to project the image (40) as a static image, in particular a text or a logo, and/or as a series of images, in particular as an animated image or a video sequence.

5. The mirror system (10) according to any one of the previous claims, wherein the mirror system (10) comprises a housing with a light passage, in particular a transparent window, and the projector (20) is located in the interior of the housing, in particular behind a rear mirror, and is arranged for projecting the image (40) through the light passage.

6. The mirror system (10) according to any one of the previous claims, wherein the mirror system (10) comprises a user data interface (22) for receiving user control data (UC), in particular a selection command, and the projector (20) is configured to project the image (40) in dependency on the received user control data (UC).

7. The mirror system (10) according to any one of the previous claims, wherein the mirror system (10) comprises a control unit (26), which is connected to the projector (20) for transmitting display data (DD) to the projector (20), which is configured to project the image (40) according to the received display data (DD).

8. The mirror system (10) according to any one of the previous claims, wherein the mirror system (10) comprises a memory unit (27) for storing display data (DD) and/or a display data interface for receiving display data, and the projector is configured to project the image (40) according to the display data (DD).

9. A vehicle, in particular a passenger car, with at least one lateral rearview mirror system (10) according to any one of the previous claims, which in particular is arranged near or at the driver's door.

10. The vehicle according to the previous claim, the vehicle comprising a vehicle management system (30), in particular a door lock control system, being connected, in particular via a vehicle data interface (24), to the lateral rearview mirror system (10) for transmitting status data of the vehicle to the lateral rearview mirror system (10).

11. A method for projecting an image (40) to the lateral environment of a vehicle by using a lateral rearview mirror system (10), in particular the one according to any of the claims 1 to 8, the method comprising the steps of:
- determining (110) image data (IP) on a remote control (50);
- transmitting (130) the image data (IP) as user control data (UC) from the remote control (50) to the lateral rearview mirror system (10); and
- using the received user control data (UC) for projecting the image (40) to the side environment of the vehicle.

12. The method according to claim 11, wherein the step of determining (110) the image data (IP) and/or the step of using (150) of the received control data (UC) comprises the step of selecting the image data (IP) from a set of stored data.

13. The method according to claim 11 or 12, wherein the step of determining (110) the image data (IP) comprises determining an image parameter (IP), which in particular is related to at least one of:
- a logo,
- a symbol,
- a pictogram,
- a text,
- a name,
- a trademark,
- an acronym,
- an emoticon,
- an emoji,
- an image,
- an animated image,
- a video,
- a position,
- a motion,
- a fading in,
- a fading out,
- a stroboscope effect,
- a rotation,
- a color,
- a direction indication, and
- a vehicle illumination.

14. The method according to any one of the claims 11 to 13, wherein the step of determining (110) the image data (IP) comprises the step of providing a preview (120) of the image (40) to be displayed by the lateral rearview mirror system (10).

15. An application program product (100) being executable on a portable remote control (50), in particular a vehicle remote control and/or a mobile phone, for performing the step of determining (110) the image data (IP) of the method according to any one of the claims 11 to 14.
